# EUROPEAN PATENT SPECIFICATION

(11) **EP 4 566 347 B1**
(45) Date of publication and mention of the grant of the patent: **03.12.2025**
(21) Application number: 23765583.2
(22) Date of filing: 09.08.2023
(51) Int. Cl.: H04W 40/02

(54) **SYSTEMS AND METHODS FOR FACILITATING UE ROUTE SELECTION POLICY RULE ENFORCEMENT**
SYSTEME UND VERFAHREN ZUR DURCHSETZUNG VON RICHTLINIEN ZUR ROUTENAUSWAHLREGELN FÜR BENUTZERGERÄTE
SYSTÈMES ET PROCÉDÉS PERMETTANT DE FACILITER L'APPLICATION DE RÈGLES DE POLITIQUE DE SÉLECTION D'ITINÉRAIRE D'ÉQUIPEMENT UE

(30) Priority: 09.08.2022 US 202263396592 P
(43) Date of publication of application: 11.06.2025
(73) Proprietor: GOOGLE LLC, Mountain View CA 94043 (US)
(72) Inventor: LIAO, Ellen, Mountain View, CA 94043 (US); NUGGEHALLI, Pavan, Mountain View, CA 94043 (US)
(74) Representative: Marks & Clerk GST
(86) International application number: PCT/US2023/029903
(87) International publication number: WO 2024/035818

(56) References cited:
- US-A1- 2021 410 059
- US-A1- 2022 070 100
- JOSEP COLOM IKUNO ET AL: "23.700-85: KI#2, Sol#31: Update to remove ENs", vol. 3GPP SA 2, no. Online; 20220817 - 20220826, 8 August 2022 (2022-08-08), XP052183978, Retrieved from the Internet <URL:https://www.3gpp.org/ftp/tsg_sa/WG2_Arch/TSGS2_152E_Electronic_2022-08/Docs/S2-2205578.zip S2-2205578 23.700-85 KI#2. Sol#31 Update to resolve ENs.docx> [retrieved on 20220808]

## Description

### FIELD OF THE DISCLOSURE

This disclosure relates generally to wireless communications and, more particularly, to techniques for facilitating the enforcement, by a user equipment (UE), of route selection policy rules for UE traffic.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In fifth-generation (5G) wireless communication systems, a user equipment (UE) can apply a UE Route Selection Policy (URSP) to outgoing traffic to determine how the UE should route traffic for a certain application executing on an operating system (OS), a certain domain, a certain network host, etc. A URSP configuration includes a set of URSP rules, with each rule including a traffic descriptor part and one or more route selection descriptors. A UE generally uses traffic descriptors to find matching applications, and generally uses route selection descriptors to initiate desired network connectivity.

In a Release 18 study item (SP-211646: Study on Enhancement of 5G UE Policy), 3GPP has proposed enabling the 5G system (5GS) to enhance the UE policy. A 3GPP study aims to investigate: (1) whether and how the network can be made aware when the UE enforces a URSP rule for a traffic; and (2) whether and what actions the 5G network can perform. The following open issues have been identified: (1) whether and how the 5G core network (5GC) can be made aware of whether or when the UE enforces a URSP rule to route application traffic to a PDU Session based on the URSP rule provisioned by the 5GC; and (2) whether there are any actions the 5GS can take after the 5GC becomes aware of whether or not the UE enforces a URSP rule for specific application traffic (and, if so, what action the 5GC should take).

If the 5GC is aware of the enforcement of a URSP rule that routes an application traffic to a protocol data unit (PDU) session, the association between the UE and an application is revealed to the 5GC. This association is adverse to user privacy if the UE does not consent to provide any indications that reveal such an association. A problem of URSP rule enforcement occurs on the UE side, in scenarios where the 5GC configures URSP rules that include rules that are inapplicable to the UE. For example, a UE may not support the use of IP tuples for privacy reasons, may not support non-IP traffic, or may not support a specific network connectivity. For a UE that does not support a particular URSP rule, the UE will simply skip/ignore the rule and move on the next rule or a default rule. However, this causes the UE to waste time, power, and processing resources whenever the UE needs to establish a PDU session, because the UE must repeatedly evaluate URSP rules that the UE does not support and cannot enforce. Moreover, the network is generally not aware of whether the UE supports a given URSP policy, and thus cannot properly configure the applicable traffic descriptor, which controls how traffic is routed to the UE.

3GPP has proposed enabling the UE to indicate unsupported URSP rules in the response message of the UE Configuration Update (UCU) procedure described in 3GPP TS 23.502 Section 4.2.4.3. However, this solution is problematic in that unnecessary power consumption and latency is caused by the evaluation of URSP rules in the UE policy, due to the UE needing to check all URSP rules whenever the UE is provisioned with UE policies in the "Delivery of UE Policies" message of the UCU procedure. Another problem results from the fact that the evaluation procedure at the UE can delay the UE response message in the UCU procedure (i.e., the "Result for Delivery of UE Policies" message). This delay can potentially cause a procedure error at the 5GC, which is expecting the response message from the UE.

Another example of the prior art can be found in Josep Colom Ikuno et AL: "23.700-85: KI#2, Sol#31: Update to remove ENs", 8 August 2022.

### SUMMARY

A UE of this disclosure can influence route selection policy (e.g., URSP) configurations in 5GS, preferably in accordance with the following objectives: (1) the network assists the UE to efficiently evaluate the provisioned rules in the route selection policy by taking into consideration support and/or unsupport status information of the UE for the route selection policy; and (2) reducing stalling or delay of the procedure at the network or the UE when the UE performs a route selection policy evaluation procedure. As used herein, "unsupport" can be considered equivalent to "no support" or "lack of support."

Generally, techniques disclosed herein enable efficient enforcement, at the UE, of route selection policy for UE traffic (e.g., outgoing UE traffic). The invention is defined by the appended set of claims.

In some implementations, the UE can indicate, to the CN, status information (support and/or lack of support) of the UE for the route selection policy. The route selection policy status information may indicate support and/or lack of support for traffic descriptor component types, traffic descriptor component values, route selection descriptor component types, and/or route selection descriptor component values, for example.

In some implementations, the route selection policy status information includes a profile identity that is mapped to a set of traffic descriptor or route selection descriptor components or component values.

In one aspect, the UE can include the support and/or unsupport status information of the UE for the route selection policy in a registration request message, within a payload container information element (IE) of the registration request message, and sets a payload container type IE of the registration request message to indicate a UE policy container.

In another aspect, the UE can include the support and/or unsupport status information of the UE for the route selection policy in a new IE of a registration request message, where the new IE is for route selection policy feature support.

In another aspect, the UE can include the support and/or unsupport status information of the UE for the route selection policy in the Extended 5G Session Management (5GSM) capability of a registration request message.

In another aspect, the UE can include the support and/or unsupport status information of the UE for the route selection policy in an uplink (UL) non-access stratum (NAS) transport message in a UE configuration update procedure.

In another aspect, the UE can include the support and/or unsupport status information of the UE for the route selection policy in an UL NAS transport message with a new container IE (for the status information) and a new container type IE.

In another aspect, the UE can include the support and/or unsupport status information of the UE for the route selection policy in a new NAS transport message the UE sends to the Policy Control Function (PCF).

These solutions and variants thereof are described in further detail below.

According to a first aspect there is provided a method of facilitating rule enforcement for UE route selection policies is performed by a UE that communicates with a CN via a radio access network (RAN). The method includes receiving from the CN a first NAS transport message for delivery of UE policies in a UE configuration update procedure and indicating the UE to report route selection policy status information and, in response to receiving the first NAS transport message, transmitting to the CN a second NAS transport message indicating a result of the delivery of UE policies. The method also includes transmitting to the CN a third NAS transport message including the route selection policy status information. The route selection policy status information indicates support or lack of support, by the UE, for one or more rules specifying route selection for UE traffic.

According to a second aspect there is provided a method of facilitating rule enforcement for UE route selection policies is performed by a CN that communicates with a UE via a RAN. The method includes transmitting to the UE a first NAS transport message for delivery of UE policies in a UE configuration update procedure including an indication requesting route selection policy status information and, in response to transmitting the first NAS transport message, receiving from the UE a second NAS transport message indicating a result of the delivery of UE policies. The method also includes receiving from the UE a third NAS transport message including the route selection policy status information. The route selection policy status information indicates support or lack of support, by the UE, for one or more rules specifying route selection for UE traffic.

### BRIEF DESCRIPTION OF THE DRAWINGS

Fig. 1 is a block diagram of an example communication system in which the techniques of this disclosure can be implemented.
Fig. 2 is a block diagram of an example URSP rule that can be applied by the UE of Fig. 1.
Fig. 3 is a messaging diagram depicting an example implementation and scenario in which the UE of Fig. 1 facilitates URSP rule enforcement by providing URSP status information to the CN in a registration request message.
Fig. 4 is a messaging diagram depicting an example implementation and scenario in which the UE of Fig. 1 facilitates URSP rule enforcement by providing URSP status information to the CN in an UL NAS transport message of an enhanced UCU procedure.
Fig. 5 is a messaging diagram depicting an example implementation and scenario in which the UE of Fig. 1 facilitates URSP rule enforcement by providing URSP status information to the CN in an UL NAS transport message with a new container IE and container type indicator.
Fig. 6 is a messaging diagram depicting an example implementation and scenario in which the UE of Fig. 1 facilitates URSP rule enforcement by providing URSP status information to the CN in a new UL NAS transport message.
Fig. 7 is a flow diagram of an example method for facilitating enforcement of route selection policy rules that can be performed by the UE of Fig. 1.
Fig. 8 is a flow diagram of an example method for facilitating enforcement of route selection policy rules that can be performed by the CN of Fig. 1.
Fig. 9 is a flow diagram of a more specific, example implementation of the method of Fig. 7.

### DETAILED DESCRIPTION OF THE DRAWINGS

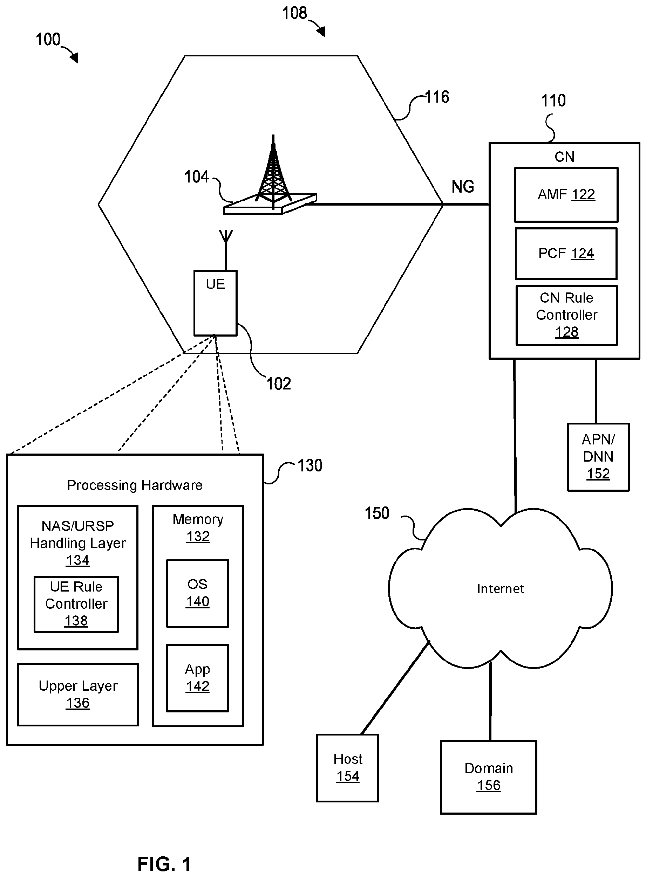

Fig. 1 illustrates an example communication system 100 in which the techniques of this disclosure can be implemented. The communication system 100 includes a user equipment (UE) 102, which can be any suitable device capable of wireless communications with a core network (CN) 110 via a radio access network (RAN) 108 that includes a base station 104.

Generally, the UE 102 provides UE route selection policy status information to the CN, where the status information explicitly or implicitly indicates to the CN that the UE does not support one or more route selection policy rules (e.g., certain components of route selection policy rules such as certain traffic descriptor component types and/or values, and/or route selection descriptor component types and/or values). Alternatively or in addition, the route selection policy status information may explicitly or implicitly indicate to the CN that the UE does support one or more route selection policy rules. While this disclosure primarily refers to UE Route Selection Policy or "URSP" policies (and associated rules, status information, etc.), it is understood that the disclosed techniques can also or instead be applied to other rule-based routing mechanisms for UE traffic.

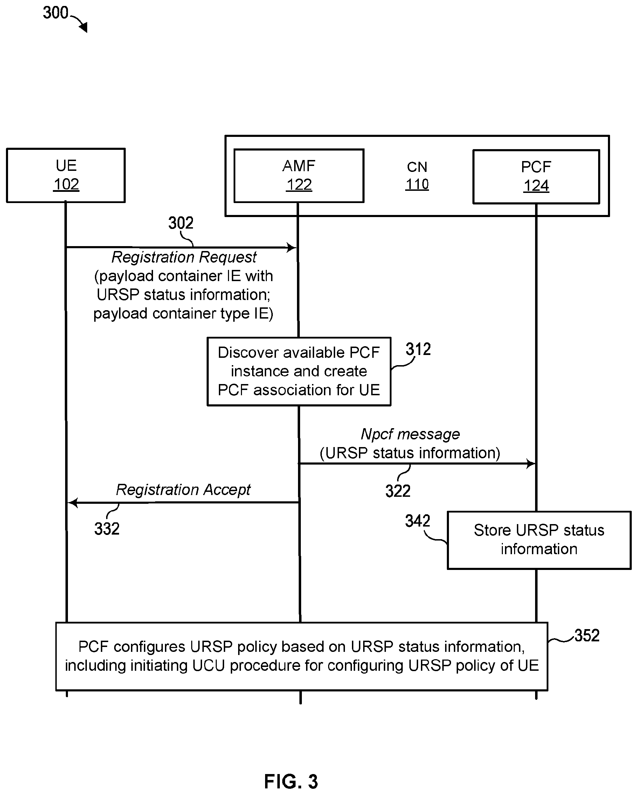

As discussed in more detail below (e.g., in connection with Figs. 3-9), the UE 102 can provide URSP status information to the CN 110 in any of various different messages and/or different information elements (IEs), depending on the implementation.

As illustrated in Fig. 1, the base station 104 may be communicatively connected to the CN 110 via an NG interface, for example. In some implementations, the base station 104 is a 5G New Radio (NR) base station operating as a gNode B (gNB), and the CN 110 is a 5G CN (5GC). In other implementations, however, the communication system 100 can include one or more base stations that operate according to radio access technologies (RATs) of types other than NR, and these base stations can be connected to CNs of other types.

The base station 104 is associated with the RAN 108 and provides coverage to a cell 116. While Fig. 1 depicts the base station 104 as associated with only one cell 116, it is understood that the base station 104 may also cover one or more additional cells not shown in Fig. 1. Further, the RAN 108 can include any suitable number of base stations that collectively support one or more RATs. Although this drawing shows a terrestrial network, it also contemplates a non-terrestrial network (NTN). The UE 102 can communicatively connect with the RAN 108 via base station 104 when operating within cell 116, and in turn can communicatively connect with the CN 110 via the RAN 108.

The UE 102 is equipped with processing hardware 130, which can include one or more general-purpose processors (e.g., CPUs) and at least one non-transitory computer-readable memory 132 storing instructions executable on the one or more general processors and/or special-purpose processing units. The memory 132 stores an operating system (OS) 140 of the UE 102, which can be any type of suitable mobile or general-purpose operating system. In addition, the memory 132 may also store one or more applications 142. In operation, the one or more applications 142 generate outgoing traffic and receive incoming traffic. These applications can include web browsers, mailing applications, messaging applications, video and audio players, gaming applications, and/or any other suitable type(s) of application(s).

To communicate with the base station 104, the CN 110, and various remote hosts, the UE 102 implements a communication protocol stack that includes an upper layer 136 and a non-access stratum (NAS)/URSP handling layer 134. The layers 134 and 136 can be implemented using any suitable combination of hardware, software, and firmware. In one example implementation, the layers 134 and 136 are a set of instructions that the processing hardware 130 executes to perform the rule application techniques discussed herein.

The upper layer 136 can identify outgoing traffic at the UE and provide outgoing traffic to the NAS/URSP handling layer 134 for routing. The NAS/URSP handling layer 134 can be a combined layer including both a NAS layer and a URSP handling layer. The NAS layer can manage the establishment and maintenance of communication sessions, such as protocol data unit (PDU) sessions. Further, the NAS layer can receive URSP rules from the CN and configure the URSP handling layer according to the received URSP rules. The combined NAS/URSP handling layer 134 can manage the application of rules for routing outgoing traffic at the UE 102. When the upper layer 136 determines that an application 142 executing on the UE 102 has queued outgoing data for transmission, the upper layer 136 can direct the NAS/URSP handling layer 134 to apply one or more URSP rules and route the outgoing application traffic accordingly. The NAS/URSP handling layer 134 in an example implementation includes a UE rule controller 138 configured to manage or control application of rules for routing outgoing traffic.

The CN 110 can be, for example, a 5GC, a less advanced core network (e.g., an evolved packet core (EPC)) or, conversely, a more advanced core network. The CN 110 may be equipped with a mobility management entity such as an Access and Mobility Management Function (AMF) 122 configured to manage authentication, registration, mobility, and other related functions, and a policy control entity such as a Policy Control Function (PCF) 124 configured to provide policies for mobility and session management. The interaction between network functions can generally be represented in two ways: (1) a service-based representation, where network functions enable other authorized network functions to access their services (this representation can also include point-to-point reference points where necessary); and (2) a reference point representation, which shows that interactions exist between network functions where a reference point is depicted between those network functions.

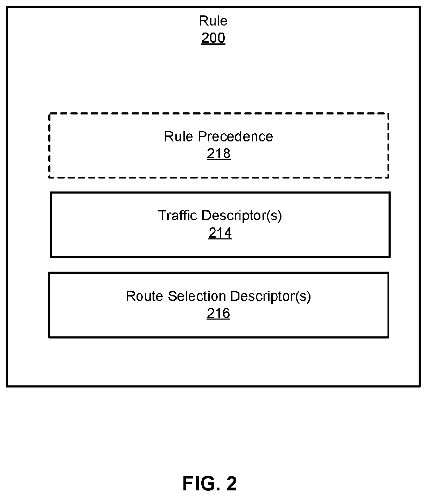

The CN 110 may also include a CN rule controller 128 configured to manage, modify, and transmit/deliver to the UE 102 (and other UEs) various rules for routing outgoing traffic at the UE 102, such as a set of rules associated with a URSP policy. The CN rule controller 128 can operate as a separate entity or as a component of the PCF 124, for example, depending on the implementation. In some scenarios, the PCF 124 provides to the UE 102 a policy in accordance with which the UE 102 is to route outgoing traffic. This policy can include a set of rules that conform to the URSP policy, discussed in more detail below with reference to the example implementation of Fig. 2.

With continued reference to Fig. 1, the CN 110 communicatively connects UE 102, via the RAN 108 including the base station 104 (and typically multiple other base stations), to one or more communication networks including a wide area network such as the Internet 150. More specifically, the CN 110 can directly connect to a data network via an access point name (APN) or data network name (DNN) gateway 152. The UE 102 can provide outgoing traffic with a traffic descriptor that identifies the gateway 152, and the CN 110 can provide a rule that references the gateway 152. When the UE 102 determines that the traffic descriptor referencing the gateway 152 is permissible, the UE rule controller 138 applies the rule and routes the outgoing traffic in accordance with the rule. In some example scenarios, outgoing traffic and/or one or more rules can reference a domain 156, a particular host 154 (e.g., by host name or Internet Protocol (IP) address), type of traffic (e.g., Ethernet), etc.

Fig. 2 is a block diagram of an example URSP rule 200 for route selection, which the UE 102 of Fig. 1 can apply to determine how the UE 102 should route outgoing traffic. A route selection policy, such as a URSP policy received from the CN 110 or a local configuration stored at the UE 102, includes one or more rules that may conform to the format of Fig. 2, for example. The example rule 200 includes one or more traffic descriptors 214, one or more route selection descriptors 216, and (optionally) a rule precedence field 218. The rule precedence field 218, if present, specifies the order in which the UE 102 applies the rule 200 relative to other rules.

The traffic descriptor(s) 214 can specify how the UE 102 should match outgoing traffic to the URSP rule 200. For example, if a traffic descriptor of descriptor(s) 214 matches the parameters of outgoing traffic, then the UE 102 would apply rule 200 to that outgoing traffic. The traffic descriptor(s) 214 may include, for example, the traffic descriptors in 3GPP TS 24.526 Table 5.2.1. Traffic descriptor(s) 214, which are interchangeably referred to herein as "traffic descriptor components" or "traffic descriptor component types," may include, for example, application descriptors (e.g., identifiers of applications 142 executing on the OS 140 of the UE 102), IP descriptors, domain descriptors (fully qualified domain name (FQDN)), non-IP descriptors, DNN type, connection capabilities type, and/or security parameter index type.

Each of the traffic descriptor(s) 214 may have a particular value corresponding to the descriptor component/type. For example, the connection capabilities type may have a value indicating "IMS" (IP Multimedia Subsystem), "MMS" (Multimedia Message Service), "SUPL" (Secure User Plane Location), or "Internet." As another example, the connection capabilities type may have a value indicating "IMS traffic," "Internet," "Internet-of-things (IoT) and machine to machine traffic," "On demand downlink streaming," "On demand uplink streaming," "Vehicular communications," "Real time interactive traffic," "Unified communications traffic," "Background traffic," "Location-based traffic," or "Critical communications." As another example, the domain descriptor may have a value indicating "full FQDN" or "partial (regular expression) FQDN." As another example, the IP descriptor may have a value indicating the type of IP address (e.g., IPv4, IPv6, or IPv4v6). As another example, the non-IP descriptor may have a value indicating type(s) of 802.1Q tags. As another example, the application descriptor may have a value indicating a list of AppIDs. As another example, a traffic categories descriptor may have a value indicating a list of specific traffic categories.

In some implementations, each of the traffic descriptor(s) 214 is encoded as a sequence of a one-octet traffic descriptor component type identifier and a traffic descriptor component value field.

The route selection descriptor(s) 216 may specify how the UE 102 should route traffic if the rule 200 applies. For example, the route selection descriptor(s) 216 may specify that the UE 102 should route traffic matching the traffic descriptor(s) 214 of the rule 200 to an already-established communication session, such as an established PDU session. As another example, the route selection descriptor(s) 216 may instruct the UE 102 to establish a new PDU session for outgoing traffic matching the rule 200. As yet another example, the route selection descriptor(s) 216 may instruct the UE 102 to offload outgoing traffic matching the rule 200 to a wireless local area network (WLAN) such as a WiFi^{®} network.

The route selection descriptor(s) 216 may include, for example, the route selection descriptors in 3GPP TS 24.526 Table 5.2.1. Route selection descriptor(s) 216, which are interchangeably referred to herein as "route selection descriptor components" or "route selection descriptor component types," may include, for example, a location criteria type, session and service continuity (SSC) mode type, single network slice selection assistance information (S-NSSAI) type, DNN type, PDU session type, preferred access type, multi-access preference type, non-seamless non-3GPP offload indication type, time window type, 5G proximity services (ProSe) layer-3 UE-to-network relay offload indication type, and/or PDU session pair ID type.

Each of the route selection descriptor(s) 216 may have a particular value corresponding to the descriptor component/type. For example, the location criteria type may have a value indicating " E-UTRA cell identities list," "NR cell identities list," "Global RAN node identities list," or "tracking area identity (TAI) list." As another example, the PDU session type may have a value indicating "IPv4," "IPv6," "IPv4v6," "Unstructured," or "Ethernet."

In some implementations, each of the route selection descriptor(s) 216 is encoded as a sequence of a one-octet route selection descriptor component type identifier and a route selection descriptor component value field.

As noted above, the UE 102 of Fig. 1 (e.g., the UE rule controller 138 or a different portion of the NAS/URSP handling layer 134) can provide URSP status information to the CN 110, e.g., according to any of the implementations and scenarios discussed below in connection with Figs. 3-9. In some illustrative (non-limiting) implementations, this URSP status information can include an indication of support (or lack of support) for: (1) one traffic descriptor component type (e.g., unsupported Non-IP descriptor); (2) more than one traffic descriptor component type (e.g., unsupported Non-IP descriptor and application descriptors); (3) one value of one traffic descriptor component type (e.g., unsupported IP descriptor with a value of "IPv4v6"); or (4) more than one component value of one traffic descriptor component type (e.g., unsupported connection capabilities values of "SUPL" and "MMS").

In some implementations, the URSP status information also, or instead, indicates support or lack of support for route selection descriptors/components/types or particular values thereof. More generally, the URSP status information can indicate support, and/or lack or support, for any suitable number (zero or more) and combination of traffic descriptor components, traffic descriptor component values, route selection descriptor components, and/or route selection descriptor component values.

In some implementations, the URSP status information only (or also) implicitly indicates the support and/or lack of support. For example, the CN 110 and the UE 102 may coordinate with respect to profile identities that are mapped to particular URSP descriptor components (e.g., particular ones of traffic descriptor(s) 214 and/or particular ones of route selection descriptor(s) 216) and/or particular values of such components. In some implementations, separate profile identities are mapped to: (1) a set of one or more traffic descriptors (and/or values); and (2) a set of one or more route selection descriptors (and/or values). In other implementations, a single profile identity is mapped both to one or more traffic descriptors and one or more route selection descriptors, and/or values thereof.

In some implementations, at least some profile identities can be associated with different subsets of available component values for a particular descriptor component (e.g., a particular traffic descriptor component). This approach can be particularly advantageous/ efficient in implementations where a particular descriptor component is associated with a relatively large number of values. For example, if a particular traffic descriptor component can have any one of 12 different values, a first profile identity may be mapped (correspond) to a first subset of three particular values that are unsupported (or supported) by the UE 102, a second profile identity may be mapped (correspond) to a second (overlapping or nonoverlapping) subset of seven particular values that are unsupported (or supported) by the UE 102, and so on. By reporting a profile identity in the URSP status information, rather than an explicit list of unsupported (and/or supported) descriptor components and/or component values, the UE 102 can help the communication system 100 reduce messaging overhead. In other implementations, however, the URSP status information explicitly indicates (e.g., lists) the unsupported and/or supported descriptor components and/or component values, thereby avoiding the need to maintain a mapping, and avoiding the associated need for coordination between the UE 102 and the CN 110.

In some implementations, the UE 102 can indicate only unsupported URSP rule(s) (e.g., descriptor component(s) and/or value(s) thereof) in the URSP status information. In other implementations, the UE 102 can indicate both supported and unsupported URSP rules in the URSP status information. For example, the UE 102 may indicate supported URSP rules in a first IE of a first message, and indicate the unsupported URSP rules in a second IE of the first message (or of a different, second message). In still other implementations, the UE 102 can indicate either supported or unsupported URSP rules in the URSP status information. For example, the UE 102 may use an IE (e.g., of the same message that includes the component(s) and/or component value(s) of the URSP status information) to indicate whether the URSP status information reflects supported or unsupported rules.

Various examples of ways in which the UE 102 may provide URSP status information to the CN 110 will now be described in connection with Figs. 3-9.

Referring first to Fig. 3, a messaging diagram depicts a scenario 300 in an example implementation in which the UE 102 of Fig. 1 communicates with the CN 110 (e.g., a 5GC) of Fig. 1. In the scenario 300, the UE 102 transmits 302 a registration request message to the AMF 122 of the CN 110 via the RAN 108 (not shown). The registration request message includes URSP status information (e.g., any of the types of URSP status information discussed above in connection with Fig. 1). In particular, the registration request message includes a payload container IE and a payload container type IE. The payload container IE may include a *UE State Indication* message that contains the URSP status information, and the payload container type IE may be set to (i.e., indicate) that the payload container type is a UE policy container.

After (e.g., in response to) receiving the registration request message at event 302, the AMF 122 at event 312 discovers an available PCF instance from the network function (NF) repository function (NRF), and creates the PCF association (i.e., to the PCF 124) for the UE 102. If the URSP status information is included in the *UE State Indication* message within the payload container IE, the AMF 122 transmits/forwards 322 the URSP status information to the associated PCF 124 in an Npcf message. The PCF 124 stores 342 (e.g., in a non-transitory memory of CN 110, not shown in Fig. 1) the URSP status information. It is understood that this stored information may be other information based on (e.g., derived from) the URSP status information. Meanwhile, the AMF 122 transmits 332 to the UE 102 a registration accept message. At event 352, the PCF 124 configures the UE 102 with a URSP policy based on the received/stored URSP status information or related information. Event 352 may include the PCF 124 initiating a UE Configuration Update (UCU) procedure (e.g., as described in 3GPP TS 23.502 Section 4.2.4.3) to configure the URSP policy of the UE.

At event 352, when the PCF 124 determines to provision or update the URSP policy at the UE based on the UCU procedure, the PCF 124 configures the URSP rules in the URSP policy (for delivery of the policy to the UE 102) based on the information stored at event 342. For example, the PCF 124 may exclude any URSP rules (e.g., descriptor components and/or component values) that are not supported by the UE 102, and/or may include particular URSP rules that are supported by the UE 102, as indicated by the information stored at event 342. In this manner, the CN 110 may reduce inefficiencies (e.g., waste of time, power, and processing resources at the UE 102) that would result if the CN 110 did not account for the URSP status information from the UE 102.

In some alternative implementations, the registration request message transmitted 302 by the UE 102 includes a new (e.g., dedicated) IE for the UE 102 to indicate URSP feature support (i.e., URSP status information). In some of these implementations, the AMF 122 may transmit 322 the URSP status information to the PCF 124 (and the subsequent events 332, 342, 352 may be performed) without checking whether a *UE State Indication* message included URSP status information.

In other alternative implementations, the UE 102 includes the URSP feature support (i.e., contains URSP status information) in the Extended 5G Session Management (5GSM) capability (e.g., the Extended 5GSM capability specified in 3GPP TS 24.501 Section 9.11.4.1) of the registration request message.

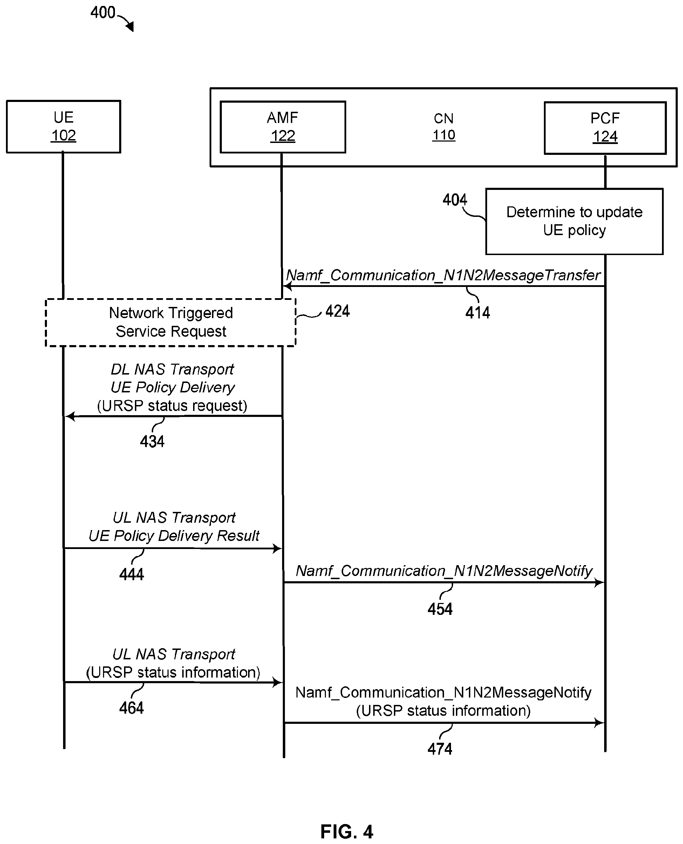

Fig. 4 is a messaging diagram depicting a scenario 400 in another example implementation, in which the UE 102 of Fig. 1 communicates with the CN 110 (e.g., a 5GC) of Fig. 1. Some or all of the operations/events shown in Fig. 4 may be a part of an enhanced UE Configuration Update (UCU) procedure.

In the scenario 400, the PCF 124 of the CN 110 determines 404 to update the URSP policy of the UE 102. In response, the PCF 124 transmits 414 a *Namf_Communication N1N2MessageTransfer* message to the AMF 122. This message may indicate (e.g., include an IE indicating) that the PCF 124 is requesting a URSP status report. In response to receiving the message at event 414, the AMF 122 at event 424 triggers a service request. If the UE 102 is in idle mode, event 424 may include the AMF 122 performing a paging procedure via the RAN 108 (not shown) to trigger a Service Request from the UE 102, for example. In some implementations and/or scenarios, event 424 is omitted.

After event 414 and/or event 424, the AMF 122 transmits 434 a UE policy delivery message to the UE 102 via the RAN 108 (not shown). The AMF 122 may transmit 434 the UE policy delivery message in the payload container of a DL NAS transport message. The DL NAS transport message may also include a new (e.g., dedicated) indication IE for requesting a URSP status report from the UE 102.

After event 434 (e.g., in response to receiving the UE policy delivery message), the UE 102 transmits 444 a UE policy delivery result message to the AMF 122 via the RAN 108 (not shown), to inform the AMF 122 of whether the URSP policy delivery had a successful result. The UE 102 may transmit 444 the UE policy delivery result message in an UL NAS transport message. After (e.g., in response to) event 444, the AMF 122 transmits 454 a *Namf_Communication NIN2MessageNotify* message to the PCF 124, to inform the PCF 124 of whether the URSP policy delivery had a successful result.

After event 444 (e.g., in response to receiving/identifying the URSP status report request within the UE policy delivery message), the UE 102 transmits 464 another UL NAS transport message to the AMF 122 via the RAN 108 (not shown). The UL NAS transport message of event 464 includes the requested URSP status information of the UE 102. In other scenarios, where the message of event 434 did not include a URSP status request, the UE 102 instead skips event 464, or alternatively does not include the URSP status information in the UL NAS transport message of event 464. The URSP status information may be included in a container IE of the UL NAS transport message of event 464, and the UL NAS transport message may indicate (e.g., include an indicator indicating) that the container type corresponds to URSP status information.

After (e.g., in response to) event 464, the AMF 122 transmits 474 a *Namf_Communication NIN2MessageNotify* message to the PCF 124, with the message including the URSP status information received from the UE 102.

In some implementations, the UE 102 triggers a URSP evaluation procedure (e.g., as discussed above) after event 444, or otherwise without causing delay to event 444. In this manner, the UE 102 can avoid having the URSP evaluation procedure delay the result message of event 444, which otherwise might increase the likelihood of a procedure error at the CN 110 (which may expect the response message of event 444 from the UE 102).

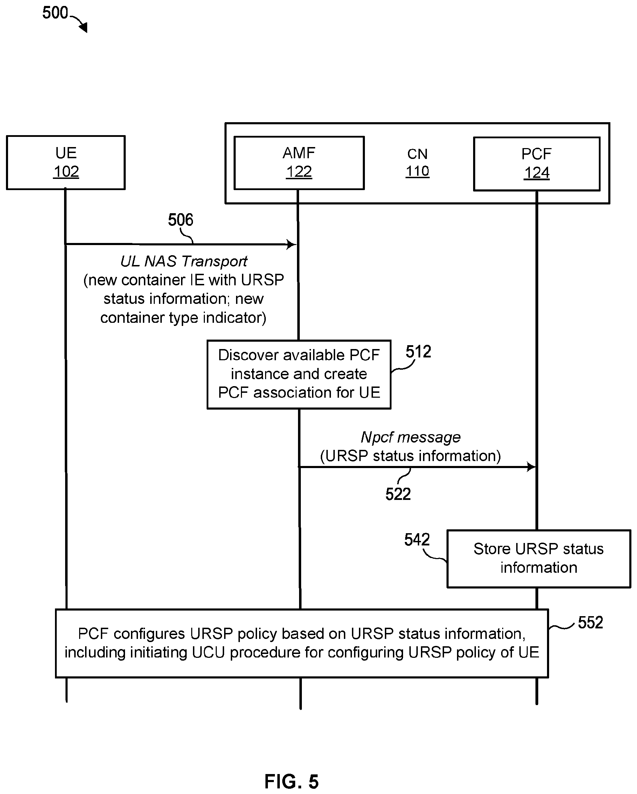

Fig. 5 is a messaging diagram depicting a scenario 500 in another example implementation, in which the UE 102 of Fig. 1 communicates with the CN 110 (e.g., a 5GC) of Fig. 1. In the scenario 500, the UE 102 transmits 506 to the AMF 122, via the RAN 108 (not shown), a UL NAS transport message with a new (e.g., dedicated) container IE and container type indicator. The new container IE includes the URSP status information of the UE 102 (e.g., as discussed above in connection with Fig. 1), and the container type indicator indicates that the container IE is for URSP status information of the UE 102. Events 512, 522, 542, and 552 may be similar to events 312, 322, 342, and 352, respectively.

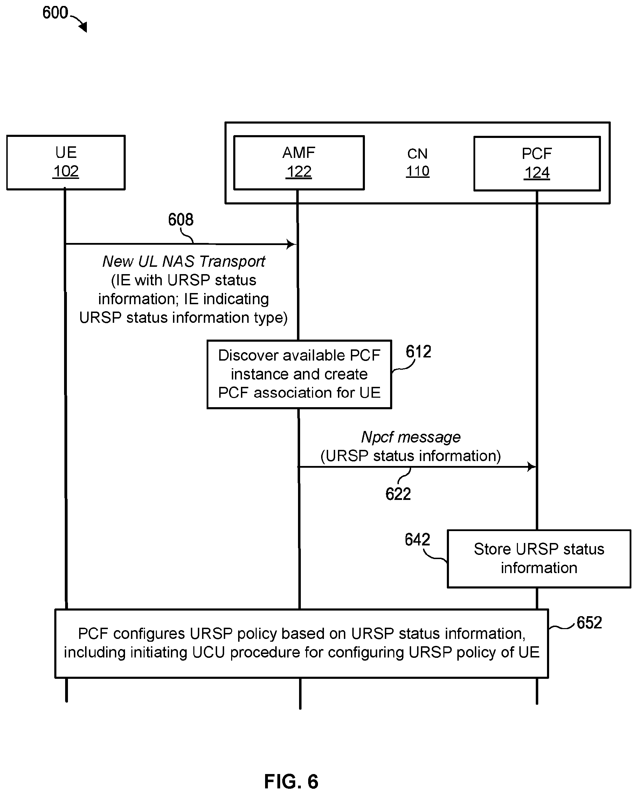

Fig. 6 is a messaging diagram depicting a scenario 600 in another example implementation, in which the UE 102 of Fig. 1 communicates with the CN 110 (e.g., a 5GC) of Fig. 1. In the scenario 600, the UE 102 transmits 608 to the AMF 122, via the RAN 108 (not shown), a new (e.g., dedicated) UL NAS transport message that includes one IE for the URSP status information of the UE 102 and another IE that indicates the type of the URSP status information (i.e., whether the URSP status information indicated supported or unsupported URSP rules, as discussed above in connection with Fig. 1). Events 612, 622, 642, and 652 may be similar to events 312, 322, 342, and 352, respectively.

In some implementations, for any of the techniques of Figs. 2-6 and specifically when in a roaming scenario, the visited PCF (VPCF) may forward the URSP status information of the UE 102 to the home PCF (HPCF) when the VPCF receives the URSP status information from the UE 102.

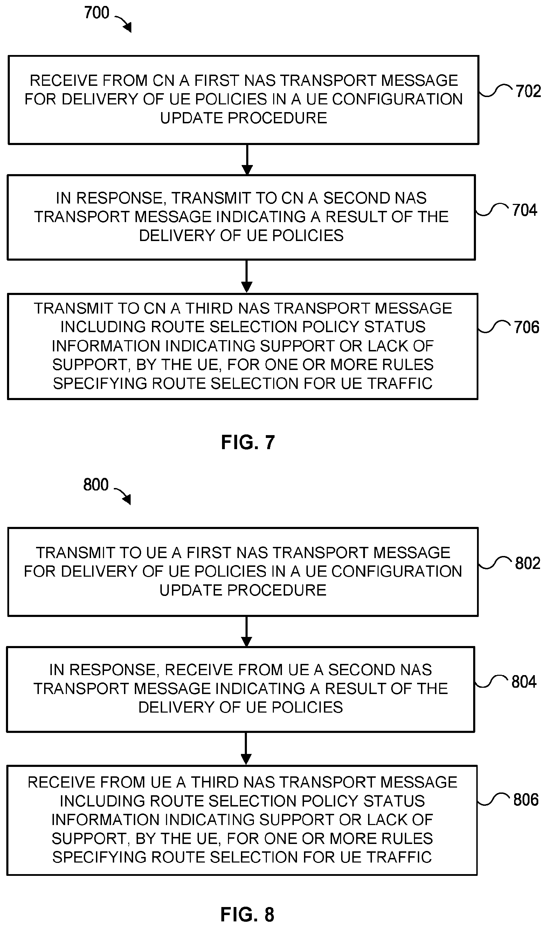

Fig. 7 depicts a flow diagram of an example method 700 of facilitating rule enforcement for UE route selection (e.g., URSP) policies. The method 700 may be performed by a UE such as the UE 102 of Fig. 1, for example. At block 702 of the method 700, the UE receives (434) from a CN (e.g., CN 110) a first NAS transport message for delivery of UE policies in a UE configuration update (e.g., UCU) procedure. At block 704, in response to receiving the first NAS transport message, the UE transmits (444) to the CN a second NAS transport message indicating a result of the delivery of UE policies. At block 706, the UE transmits (454) to the CN a third NAS transport message including route selection policy (e.g., URSP) status information. The route selection policy status information indicates support or lack of support, by the UE, for one or more rules specifying route selection for UE traffic (e.g., URSP rules, such as traffic and/or route selection descriptor components and/or values, as discussed above in connection with Fig. 1).

Fig. 8 depicts a flow diagram of an example method 800 of facilitating rule enforcement for UE route selection (e.g., URSP) policies. The method 800 may be performed by a CN such as the CN 110 of Fig. 1, for example. The method 800 may occur at the CN 110 while the method 700 occurs at the UE 102, for example. At block 802 of the method 800, the CN transmits (434) to a UE (e.g., UE 102) a first NAS transport message for delivery of UE policies in a UE configuration update (e.g., UCU) procedure. At block 804, in response to transmitting the first NAS transport message, the UE transmits (444) to the CN a second NAS transport message indicating a result of the delivery of UE policies. At block 706, the UE transmits (454) to the CN a third NAS transport message including route selection policy (e.g., URSP) status information. The route selection policy status information indicates support or lack of support, by the UE, for one or more rules specifying route selection for UE traffic (e.g., URSP rules, such as traffic and/or route selection descriptor components and/or values, as discussed above in connection with Fig. 1).

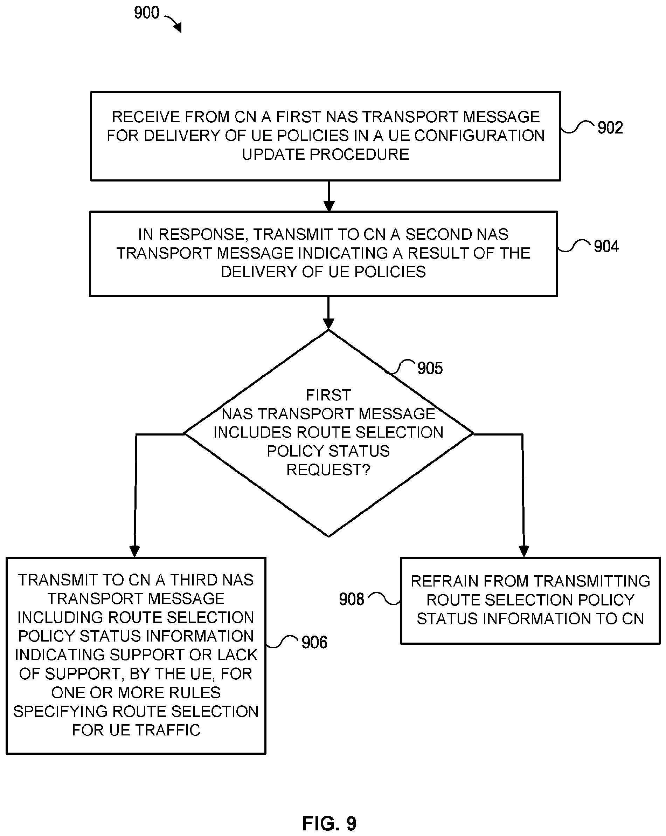

Fig. 9 is a flow diagram of a method 900, which may be a more specific implementation of the method 700 of Fig. 7, for example. The method 900 may be performed by a UE such as the UE 102 of Fig. 1, for example. At block 902 of the method 900, the UE receives (434) from a CN (e.g., CN 110) a first NAS transport message for delivery of UE policies in a UE configuration update (e.g., UCU) procedure. At block 904, in response to receiving the first NAS transport message, the UE transmits (444) to the CN a second NAS transport message indicating a result of the delivery of UE policies. At block 905, the UE determines whether the first NAS transport message includes a route selection policy status request (e.g., the request of event 434 in Fig. 4). If so, flow proceeds to block 906, at which the UE transmits (454) to the CN a third NAS transport message including route selection policy (e.g., URSP) status information. The route selection policy status information indicates support or lack of support, by the UE, for one or more rules specifying route selection for UE traffic (e.g., URSP rules, such as traffic and/or route selection descriptor components and/or values, as discussed above in connection with Fig. 1). If the UE instead determines that the first NAS transport message does not include a route selection policy status request, flow proceeds to block 908, and the UE refrains from transmitting route selection policy status information to the CN.

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an Internet-of-things (IoT) device or a mobile-internet device (MID). Depending on the type, the user device can include one or more general-purpose processors, a computer-readable memory, a user interface, one or more network interfaces, one or more sensors, etc.

In some implementations, for the flow diagrams disclosed herein, the elements, blocks, or operations may occur in a different order than shown, may be repeated, and/or may overlap with each other in time. Moreover, additional elements, blocks, or operations not shown in the flow diagrams may be included.

Certain embodiments are described in this disclosure as including logic or a number of components or modules. Modules may can be software modules (*e.g.,* code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g.,* configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method, performed by a user equipment ,UE, that communicates with a core network, CN, via a radio access network, RAN, of facilitating rule enforcement for UE route selection policies, the method comprising:
receiving from the CN a first non-access stratum, NAS, transport message for delivery of UE policies in a UE configuration update procedure and indicating the UE to report route selection policy status information;
in response to receiving the first NAS transport message, transmitting to the CN a second NAS transport message indicating a result of the delivery of UE policies; and
transmitting to the CN a third NAS transport message including the route selection policy status information, the route selection policy status information indicating support or lack of support, by the UE, for one or more rules specifying route selection for UE traffic.

2. The method of claim 1, wherein the route selection policy status information includes a plurality of route selection policy rules, and wherein the route selection policy status information indicates support for at least a first rule of the plurality of route selection policy rules and lack of support for at least a second rule of the plurality of route selection policy rules.

3. The method of claim 1 or 2, wherein the route selection policy status information indicates support or lack of support, by the UE, for one or more traffic descriptor component types, and optionally,
wherein the one or more traffic descriptor component types include a connection capabilities type.

4. The method of any one of claims 1-3, wherein the route selection policy status information indicates support or lack of support, by the UE, for one or more traffic descriptor component values, and optionally,
wherein the one or more traffic descriptor component values include one or more connection capabilities values, and optionally,
wherein the one or more connection capabilities values include one or more of:
Internet protocol multimedia system ,IMS;
multimedia messaging service, MMS;
secure user plane location,SUPL; or Internet.

5. The method of any one of claims 1-4, wherein the route selection policy status information indicates support or lack of support, by the UE, for one or both of (i) one or more route selection descriptor component types and (ii) one or more route selection descriptor component values.

6. The method of any one of claims 1-5, wherein the route selection policy status information includes a profile identity mapped to a set of traffic descriptor components.

7. The method of any one of claims 1-5, wherein the route selection policy status information includes a profile identity mapped to a set of route selection descriptor components.

8. The method of any one of claims 1-7, wherein:
the receiving the first NAS transport message includes receiving the first NAS transport message from an access and mobility management function, AMF, of the CN;
the transmitting the second NAS transport message includes transmitting the second NAS transport message to the AMF; and
the transmitting the third NAS transport message includes transmitting the third NAS transport message to the AMF.

9. The method of any one of claims 1-8, wherein the transmitting the third NAS transport message occurs after the transmitting the second NAS transport message.

10. A user equipment, UE, comprising hardware and configured to perform a method according to any one of claims 1-9.

11. A method, performed by a core network,CN, that communicates with a user equipment,UE, via a radio access network,RAN, of facilitating rule enforcement for UE route selection policies, the method comprising:
transmitting to the UE a first non-access stratum ,NAS, transport message for delivery of UE policies in a UE configuration update procedure including an indication requesting route selection policy status information;
in response to transmitting the first NAS transport message, receiving from the UE a second NAS transport message indicating a result of the delivery of UE policies; and
receiving from the UE a third NAS transport message including the route selection policy status information, the route selection policy status information indicating support or lack of support, by the UE, for one or more rules specifying route selection for UE traffic.

12. The method of claim 11, wherein the route selection policy status information includes a plurality of route selection policy rules, and wherein the route selection policy status information indicates support for at least a first rule of the plurality of route selection policy rules and lack of support for at least a second rule of the plurality of route selection policy rules.

13. The method of claim 11 or 12, wherein the route selection policy status information indicates support or lack of support, by the UE, for one or more traffic descriptor component types, and wherein optionally, the one or more traffic descriptor component types include a connection capabilities type.

14. The method of any one of claims 11-13, wherein the route selection policy status information indicates support or lack of support, by the UE, for one or more traffic descriptor component values, and wherein optionally, wherein the one or more traffic descriptor component values include one or more connection capabilities values, and wherein optionally, the one or more connection capabilities values include one or more of:
Internet protocol multimedia system ,IMS;
multimedia messaging service ,MMS;
secure user plane location ,SUPL; or Internet.

15. A core network ,CN, comprising hardware and configured to perform a method according to any one of claims 11-14.

## Patentansprüche

1. Verfahren, das von einem Benutzergerät, UE, durchgeführt wird, das mit einem Kernnetzwerk, CN, über ein Funkzugangsnetzwerk, RAN, kommuniziert, zum Erleichtern der Regeldurchsetzung für UE-Routenauswahlrichtlinien, wobei das Verfahren umfasst:
Empfangen vom CN einer ersten Nicht-Zugriffs-Schicht-, NAS-, Transportnachricht zur Übermittlung von UE-Richtlinien in einem UE-Konfigurationsaktualisierungsverfahren und Anzeigen an das UE, Routenauswahlrichtlinien-Statusinformationen zu melden;
als Reaktion auf das Empfangen der ersten NAS-Transportnachricht, Übertragen an das CN einer zweiten NAS-Transportnachricht, die ein Ergebnis der Übermittlung von UE-Richtlinien anzeigt; und
Übertragen an das CN einer dritten NAS-Transportnachricht, die die Routenauswahlrichtlinien-Statusinformationen beinhaltet, wobei die Routenauswahlrichtlinien-Statusinformationen die Unterstützung oder mangelnde Unterstützung durch die UE für eine oder mehrere Regeln anzeigen, die die Routenauswahl für den UE-Verkehr spezifizieren.

2. Verfahren nach Anspruch 1, wobei die Routenauswahlrichtlinien-Statusinformationen eine Vielzahl von Routenauswahlrichtlinien-Regeln beinhalten, und wobei die Routenauswahlrichtlinien-Statusinformationen die Unterstützung für wenigstens eine erste Regel der Vielzahl von Routenauswahlrichtlinien-Regeln und die mangelnde Unterstützung für wenigstens eine zweite Regel der Vielzahl von Routenauswahlrichtlinien-Regeln anzeigen.

3. Verfahren nach Anspruch 1 oder 2, wobei die Routenauswahlrichtlinien-Statusinformationen die Unterstützung oder mangelnde Unterstützung durch das UE für einen oder mehrere Verkehrsdeskriptor-Komponententypen anzeigen, und optional, wobei der eine oder die mehreren Verkehrsdeskriptor-Komponententypen einen Verbindungsmöglichkeiten-Typ beinhalten.

4. Verfahren nach einem der Ansprüche 1-3, wobei die Routenauswahlrichtlinien-Statusinformationen die Unterstützung oder mangelnde Unterstützung durch das UE für einen oder mehrere Verkehrsdeskriptor-Komponentenwerte anzeigen, und optional,
wobei der eine oder die mehreren Verkehrsdeskriptor-Komponentenwerte einen oder mehrere Verbindungsmöglichkeiten-Werte beinhalten, und optional,
wobei der eine oder die mehreren Verbindungsmöglichkeiten-Werte eines oder mehrere der Folgenden beinhalten:
Internetprotokoll-Multimediasystem, IMS;
Multimedia-Nachrichtendienst, MMS;
sichere Benutzerebenen-Standortbestimmung, SUPL; oder
Internet.

5. Verfahren nach einem der Ansprüche 1-4, wobei die Routenauswahlrichtlinien-Statusinformationen die Unterstützung oder mangelnde Unterstützung durch die UE für eines oder beides von (i) einem oder mehreren Routenauswahl-Deskriptor-Komponententypen und (ii) einem oder mehreren Routenauswahl-Deskriptor-Komponentenwerten anzeigen.

6. Verfahren nach einem der Ansprüche 1-5, wobei die Routenauswahlrichtlinien-Statusinformationen eine Profilidentität beinhalten, die einem Satz von Verkehrsdeskriptor-Komponenten zugeordnet ist.

7. Verfahren nach einem der Ansprüche 1-5, wobei die Routenauswahlrichtlinien-Statusinformationen eine Profilidentität beinhalten, die einem Satz von Routenauswahl-Deskriptor-Komponenten zugeordnet ist.

8. Verfahren nach einem der Ansprüche 1-7, wobei:
das Empfangen der ersten NAS-Transportnachricht das Empfangen der ersten NAS-Transportnachricht von einer Zugangs- und Mobilitätsmanagementfunktion, AMF, des CN beinhaltet;
das Übertragen der zweiten NAS-Transportnachricht das Übertragen der zweiten NAS-Transportnachricht an die AMF beinhaltet; und
das Übertragen der dritten NAS-Transportnachricht das Übertragen der dritten NAS-Transportnachricht an die AMF beinhaltet.

9. Verfahren nach einem der Ansprüche 1-8, wobei das Übertragen der dritten NAS-Transportnachricht nach dem Übertragen der zweiten NAS-Transportnachricht erfolgt.

10. Benutzergerät, UE, das Hardware umfasst und konfiguriert ist, um ein Verfahren nach einem der Ansprüche 1-9 durchzuführen.

11. Verfahren, das von einem Kernnetzwerk, CN, durchgeführt wird, das mit einem Benutzergerät, UE, über ein Funkzugangsnetzwerk, RAN, kommuniziert, zur Erleichterung der Regeldurchsetzung für UE-Routenauswahlrichtlinien, wobei das Verfahren umfasst:
Übertragen an das UE einer ersten Nicht-Zugriffs-Schicht-, NAS-, Transportnachricht zur Übermittlung von UE-Richtlinien in einem UE-Konfigurationsaktualisierungsverfahren, einschließlich einer Anzeige, die Routenauswahlrichtlinien-Statusinformationen anfordert;
als Reaktion auf das Übertragen der ersten NAS-Transportnachricht, Empfangen von dem UE einer zweiten NAS-Transportnachricht, die ein Ergebnis der Übermittlung von UE-Richtlinien anzeigt; und
Empfangen von dem UE einer dritten NAS-Transportnachricht, die die Routenauswahlrichtlinien-Statusinformationen beinhaltet, wobei die Routenauswahlrichtlinien-Statusinformationen die Unterstützung oder mangelnde Unterstützung durch das UE für eine oder mehrere Regeln anzeigen, die die Routenauswahl für den UE-Verkehr spezifizieren.

12. Verfahren nach Anspruch 11, wobei die Routenauswahlrichtlinien-Statusinformationen eine Vielzahl von Routenauswahlrichtlinien-Regeln beinhalten, und wobei die Routenauswahlrichtlinien-Statusinformationen die Unterstützung für wenigstens eine erste Regel der Vielzahl von Routenauswahlrichtlinien-Regeln und die mangelnde Unterstützung für wenigstens eine zweite Regel der Vielzahl von Routenauswahlrichtlinien-Regeln anzeigen.

13. Verfahren nach Anspruch 11 oder 12, wobei die Routenauswahlrichtlinien-Statusinformationen die Unterstützung oder mangelnde Unterstützung durch das UE für einen oder mehrere Verkehrsdeskriptor-Komponententypen anzeigen, und wobei optional der eine oder die mehreren Verkehrsdeskriptor-Komponententypen einen Verbindungsmöglichkeiten-Typ beinhalten.

14. Verfahren nach einem der Ansprüche 11-13, wobei die Routenauswahlrichtlinien-Statusinformationen die Unterstützung oder mangelnde Unterstützung durch das UE für einen oder mehrere Verkehrsdeskriptor-Komponentenwerte anzeigen, und wobei optional, wobei der eine oder die mehreren Verkehrsdeskriptor-Komponentenwerte einen oder mehrere Verbindungsmöglichkeiten-Werte beinhalten, und wobei optional der eine oder die mehreren Verbindungsmöglichkeiten-Werte eines oder mehrere der Folgenden beinhalten:
Internetprotokoll-Multimediasystem, IMS;
Multimedia-Nachrichtendienst, MMS;
sichere Benutzerebenen-Standortbestimmung, SUPL; oder
Internet.

15. Kernnetzwerk, CN, das Hardware umfasst und konfiguriert ist, um ein Verfahren nach einem der Ansprüche 11-14 durchzuführen.

## Revendications

1. Procédé, réalisé par un équipement utilisateur, UE, qui communique avec un réseau central, CN, via un réseau d'accès radio, RAN, de facilitation d'application de règles pour des politiques de sélection d'itinéraire d'UE, le procédé comprenant :
la réception en provenance du CN d'un premier message de transport de couche de non-accès, NAS, pour la livraison de politiques UE dans une procédure de mise à jour de configuration UE et l'indication à l'UE de signaler des informations d'état de la politique de sélection d'itinéraire ;
en réponse à la réception du premier message de transport NAS, la transmission au CN d'un deuxième message de transport NAS indiquant un résultat de la livraison des politiques UE ; et
la transmission au CN d'un troisième message de transport NAS comportant les informations d'état de politique de sélection d'itinéraire, les informations d'état de la politique de sélection d'itinéraire indiquant la prise en charge ou l'absence de prise en charge, par l'UE, d'une ou plusieurs règles spécifiant la sélection d'itinéraire pour le trafic UE.

2. Procédé selon la revendication 1, dans lequel les informations d'état de politique de sélection d'itinéraire comportent une pluralité de règles de politique de sélection d'itinéraire, et dans lequel les informations d'état de politique de sélection d'itinéraire indiquent la prise en charge d'au moins une première règle de la pluralité de règles de politique de sélection d'itinéraire et l'absence de prise en charge d'au moins une seconde règle de la pluralité de règles de politique de sélection d'itinéraire.

3. Procédé selon la revendication 1 ou 2, dans lequel les informations d'état de politique de sélection d'itinéraire indiquent la prise en charge ou l'absence de prise en charge, par l'UE, d'un ou plusieurs types de composants descripteurs de trafic, et éventuellement,
dans lequel les un ou plusieurs types de composants descripteurs de trafic comportent un type de capacités de connexion.

4. Procédé selon l'une quelconque des revendications 1 à 3, dans lequel les informations d'état de politique de sélection d'itinéraire indiquent la prise en charge ou l'absence de prise en charge, par l'UE, d'une ou plusieurs valeurs de composants descripteurs de trafic, et éventuellement,
dans lequel les une ou plusieurs valeurs de composants descripteurs de trafic comportent une ou plusieurs valeurs de capacités de connexion, et éventuellement,
dans lequel les une ou plusieurs valeurs de capacités de connexion comportent l'un ou plusieurs de :
un système multimédia à protocole Internet, IMS ;
un service de messagerie multimédia, MMS ;
un emplacement sécurisé du plan utilisateur, SUPL ; ou
Internet.

5. Procédé selon l'une quelconque des revendications 1 à 4, dans lequel les informations d'état de politique de sélection d'itinéraire indiquent la prise en charge ou l'absence de prise en charge, par l'UE, de l'un ou des deux (i) d'un ou plusieurs types de composants descripteurs de sélection d'itinéraire et (ii) d'une ou plusieurs valeurs de composants descripteurs de sélection d'itinéraire.

6. Procédé selon l'une quelconque des revendications 1 à 5, dans lequel les informations d'état de politique de sélection d'itinéraire comportent une identité de profil mappée à un ensemble de composants descripteurs de trafic.

7. Procédé selon l'une quelconque des revendications 1 à 5, dans lequel les informations d'état de politique de sélection d'itinéraire comportent une identité de profil mappée à un ensemble de composants descripteurs de sélection d'itinéraire.

8. Procédé selon l'une quelconque des revendications 1 à 7, dans lequel :
la réception du premier message de transport NAS comporte la réception du premier message de transport NAS à partir d'une fonction de gestion d'accès et de mobilité, AMF, du CN ;
la transmission du deuxième message de transport NAS comporte la transmission du deuxième message de transport NAS à l'AMF ; et
la transmission du troisième message de transport NAS comporte la transmission du troisième message de transport NAS à l'AMF.

9. Procédé selon l'une quelconque des revendications 1 à 8, dans lequel la transmission du troisième message de transport NAS se produit après la transmission du deuxième message de transport NAS.

10. Équipement utilisateur, UE, comprenant un matériel et configuré pour réaliser un procédé selon l'une quelconque des revendications 1 à 9.

11. Procédé, réalisé par un réseau central, CN, qui communique avec un équipement utilisateur, UE, via un réseau d'accès radio, RAN, de facilitation d'application de règles pour des politiques de sélection d'itinéraire d'UE, le procédé comprenant :
la transmission à l'UE d'un premier message de transport de couche de non-accès, NAS, pour la livraison de politiques UE dans une procédure de mise à jour de configuration UE comportant une indication demandant des informations d'état de politique de sélection d'itinéraire ;
en réponse à la transmission du premier message de transport NAS, la réception par l'UE d'un deuxième message de transport NAS indiquant un résultat de la livraison des politiques UE ; et
la réception par l'UE d'un troisième message de transport NAS comportant les informations d'état de politique de sélection d'itinéraire, les informations d'état de politique de sélection d'itinéraire indiquant la prise en charge ou l'absence de prise en charge, par l'UE, d'une ou plusieurs règles spécifiant la sélection d'itinéraire pour le trafic UE.

12. Procédé selon la revendication 11, dans lequel les informations d'état de la politique de sélection d'itinéraire comportent une pluralité de règles de politique de sélection d'itinéraire, et dans lequel les informations d'état de la politique de sélection d'itinéraire indiquent la prise en charge d'au moins une première règle de la pluralité de règles de politique de sélection d'itinéraire et l'absence de prise en charge d'au moins une seconde règle de la pluralité de règles de politique de sélection d'itinéraire.

13. Procédé selon la revendication 11 ou 12, dans lequel les informations d'état de politique de sélection d'itinéraire indiquent la prise en charge ou l'absence de prise en charge, par l'UE, d'un ou plusieurs types de composants descripteurs de trafic, et dans lequel éventuellement, les un ou plusieurs types de composants descripteurs de trafic comportent un type de capacités de connexion.

14. Procédé selon l'une quelconque des revendication 11 à 13, dans lequel les informations d'état de politique de sélection d'itinéraire indiquent la prise en charge ou l'absence de prise en charge, par l'UE, d'une ou plusieurs valeurs de composants descripteurs de trafic, et dans lequel éventuellement, dans lequel les une ou plusieurs valeurs de composants descripteurs de trafic comportent une ou plusieurs valeurs de capacités de connexion, et dans lequel éventuellement, les une ou plusieurs valeurs de capacités de connexion comportent l'un ou plusieurs de :
un système multimédia à protocole Internet, IMS ;
un service de messagerie multimédia, MMS ;
un emplacement sécurisé du plan utilisateur, SUPL ; ou
Internet.

15. Réseau central, CN, comprenant un matériel et configuré pour réaliser un procédé selon l'une quelconque des revendications 11 à 14.
